# EUROPÄISCHE PATENTSCHRIFT

(11) **EP 2 438 118 B1**
(45) Veröffentlichungstag und Bekanntmachung des Hinweises auf die Patenterteilung: **25.06.2014**
(21) Anmeldenummer: 10725408.8
(22) Anmeldetag: 28.05.2010
(51) Int. Cl.: C08L 71/00

(54) **KLEB- UND DICHTSTOFFE AUF BASIS SILANTERMINIERTER BINDEMITTEL ZUM VERKLEBEN UND ABDICHTEN VON FLEXIBLEN SOLARFOLIEN / PHOTOVOLTAIKMODULEN**
ADHESIVES AND SEALANTS BASED ON SILANE-TERMINATED BINDERS FOR BONDING AND SEALING FLEXIBLE SOLAR FILMS/PHOTOVOLTAIC MODULES
ADHÉSIFS ET MATÉRIAUX D'ÉTANCHÉITÉ À BASE DE LIANTS À TERMINAISON SILANE, POUR COLLER ET ÉTANCHÉIFIER DES FEUILLES SOLAIRES/MODULES PHOTOVOLTAÏQUES SOUPLES

(30) Priorität: 03.06.2009 DE 102009026679
(43) Veröffentlichungstag der Anmeldung: 11.04.2012
(73) Patentinhaber: Henkel AG & Co. KGaA, 40589 Düsseldorf (DE)
(72) Erfinder: KOHL, Matthias, 69469 Weinheim (DE); PRÖBSTER, Manfred, 69226 Nußloch (DE); FERTIG, Thilo, 68782 Brühl (DE)
(86) Internationale Anmeldenummer: PCT/EP2010/057380
(87) Internationale Veröffentlichungsnummer: WO 2010/139611

(56) Entgegenhaltungen:
- EP-A1- 1 746 133
- WO-A1-03/059981
- WO-A1-2005/108520
- WO-A1-2006/130592
- WO-A2-2006/015659
- WO-A2-2008/027499
- DE-A1- 19 923 300
- DE-A1-102005 041 954
- US-A1- 2004 180 155
- US-A1- 2007 060 732
- US-B1- 6 750 309

## Beschreibung

Die Erfindung betrifft die Verwendung eines ein- oder mehrkomponentigen Kleb-/Dichtstoffs auf Basis silanterminierter Prepolymerer zur elastischen Verklebung von zwei oder mehreren gleichen und/oder verschiedenartigen Substraten bei der Fertigung von Photovoltaik-Modulen sowie bei der Befestigung von Photovoltaik-Modulen auf Dach- oder sonstigen Flächen.

In der metallverarbeitenden Industrie, der Fahrzeugindustrie, im Nutzfahrzeugbau sowie in deren Zulieferindustrie, bei der Autoreparatur, in der Bauindustrie und dem Handwerk werden vielfach gleiche oder verschiedene metallische und nichtmetallische Substrate klebend bzw. abdichtend miteinander verbunden. Hierfür stehen bereits eine Reihe von einkomponentigen bzw. 2- oder mehrkomponentigen Kleb-/Dichtstoffen zur Verfügung. Einkomponentige Kleb-/ Dichtstoffe werden zwar in der Regel von den Anwendern bevorzugt, da hierbei keine Misch- und Dosierfehler bei der Anwendung auftreten können, bei der Verklebung von nichtporösen Substraten ist die Verwendung von einkomponentig feuchtigkeitshärtenden Kleb-/Dichtstoffen jedoch wegen der relativ langsamen Durchhärtungsgeschwindigkeit stark eingeschränkt.

Konventionelle 2-komponentige Kleb-/Dichtstoffsysteme enthalten in der einen Komponente Bindemittel mit einem Typus von reaktiven, vernetzungsfähigen Gruppen und in der zweiten Komponente Bindemittelanteile oder Härter, deren funktionelle Gruppen coreaktiv mit den reaktiven Gruppen der ersten Komponente sind. Beispiele hierfür sind Polyurethansysteme mit isocyanatgruppenhaltigen Verbindungen in der einen Komponente und Aminogruppen bzw. Hydroxylgruppen oder Mercaptangruppen enthaltenden Bindemitteln oder Härtern in der zweiten Komponente. In gleicher Weise bestehen die traditionellen zweikomponentigen Epoxidharzsysteme aus einer Komponente mit Bindemitteln, die Epoxygruppen enthalten und die dazugehörige zweite Komponente weist Verbindungen mit Mercaptangruppen bzw. Aminogruppen auf. Nachteilig bei derartigen Systemen ist es, dass diese Systeme auf Mischungsfehler sehr empfindlich reagieren, da die beiden Komponenten ihre optimale Härtung und Eigenschaften nur erhalten, wenn sie im stöchiometrisch richtigen Verhältnis vollständig miteinander gemischt werden.

EP 0678544 A1 beschreibt 2-komponentige Kleb-, Dichtungs- oder Beschichtungsmassen aus einer Komponente A und einer Komponente D. Dabei soll die Komponente A aushärten, sobald sie mit Wasser oder der Komponente D in Berührung kommt, die den Härter für die Komponente A enthält. Gemäß der Lehre dieser Schrift soll die Komponente D entweder eine Komponente B sein, die einen Bestandteil enthält, der mit Wasser oder ggf. auch bei Kontakt mit der Komponente A aushärtet, alternativ soll die Komponente D eine Mischung aus einem Feststoff und einem flüchtigen Bestandteil sein, der die Vernetzung der Komponente A bewirkt. Als Vorteil dieses 2-komponentigen Systems wird angegeben, dass die Komponente D zwar als Härter für die Komponente A wirkt, jedoch ein Überschuss derselben entweder selbst aushärtet oder keine bleibenden störenden Rückstände in der gehärteten Masse zurücklässt.

Einfachere Systeme enthalten als Komponente A feuchtigkeitsvernetzende Bindemittel und als Komponente B Wasser oder Wasser abgebende Substanzen und ggf. einen Katalysator. So beschreibt US 6,025,445 A ein 2-komponentiges Kleb-/Dichtstoffsystem bei dem die Komponente A als Hauptbestandteil ein gesättigtes Kohlenwasserstoffpolymer enthält, das Silicium enthaltende Gruppen aufweist, die hydrolysierbare Gruppen an das Siliciumatom gebunden haben und die unter Bildung von Siloxangruppen vernetzbar sind. Die Komponente B enthält einen Silanol-Kondensations-Katalysator und Wasser oder ein hydratisiertes Metallsalz.

WO 96/35761 A1 beschreibt 2-komponentige Kleb-/Dichtstoffe auf der Basis Silan-terminierter Prepolmerer, deren Komponente A ein einkomponentig, feuchtigkeitshärtender Kleb-/Dichtstoff mit hoher Anfangsfestigkeit ist und dessen Komponente B ein Vernetzer und/oder Beschleuniger für die Komponente A ist. In besonders bevorzugter Ausführungsformen soll die Komponente B aus einer pastösen, stabilen Mischung aus Weichmachern, Wasser, Verdickungsmitteln und ggf. weiteren Hilfsstoffen bestehen.

Die EP 370463 A2, EP 370464 A2 sowie die EP 370531 A2 beschreiben zwei- oder mehrkomponentige Klebstoffzusammensetzungen, deren eine Komponente ein flüssiges organisches elastomeres Polymer mit wenigstens einer Silangruppen enthaltenden reaktiven Gruppe pro Molekül sowie ein Härtungsmittel für ein Epoxidharz enthält und deren zweite Komponente ein Epoxidharz enthält sowie ggf. einen Härtungskatalysator für das Silangruppen enthaltende elastomere Polymer. Als Härtungsmittel für die Epoxy-Komponente werden dabei die in der Epoxidchemie üblichen Di- oder Polyamine, Carbonsäureanhydride, Alkohole und Phenole und ggf. typische Katalysatoren für die Epoxidreaktion, wie tertiäre Amine, deren Salze, Imidazole, Dicyandiamid usw. vorgeschlagen. Derartige 2-komponentige Systeme haben die spezifischen Nachteile aller Standard-Zweikomponentensysteme: die Härtungsgeschwindigkeit sowie die Endeigenschaften des ausgehärteten Klebstoffes hängen in sehr hohem Maße von der korrekten Einhaltung des Mischungsverhältnisses der Komponenten sowie von der Vollständigkeit der Durchmischung ab.

WO 2005/108520 A1 offenbart 2-komponentige Kleb-/Dichtstoffe bestehend aus einer Komponente A, die mindestens ein silanterminiertes Prepolymer, mindestens einen Katalysator für die Silanvernetzung sowie niedermolekulare organofunktionelle Silane enthält und einer Komponente B, die mindestens ein silanterminiertes Prepolymer, Wasser sowie Wasser lösende oder Wasser absorbierende Mittel enthält. Als Katalysatoren werden vorzugsweise metallorganische Verbindungen wie Zinn- oder Titanverbindungen vorgeschlagen. Diese Zusammensetzungen sollen sich für mischungstolerante Anwendungen eignen, da die beiden Komponenten im wesentlichen in gleichen Volumenmengen vor der Anwendung miteinander gemischt werden sollen. Nach der Lehre dieser Schrift eignen sich derartige Kleb-/Dichtstoffe zum Verkleben oder Abdichten von Bauteilen aus ggf. lackierten Metallen wie Aluminium oder Stahl, insbesondere Edelstahl, aus Glas, Holz und/oder Kunststoffen.

US 2007/0088137 A1 beschreibt feuchtigkeitshärtende Klebstoffzusammensetzungen, die im Wesentlichen frei von flüchtigen organischen Verbindungen sind. Diese sollen beständig gegen Verbrennung sein und eine hohe Schälfestigkeit gewährleisten. Sie sollen geeignet sein, um die Fixierung einer Gummimembran an ein starres Flachdach zu gewährleisten. Die Zusammensetzungen enthalten Polymere mit hydrolysierbaren Silan-Endgruppen, ein Phenolharz und eine nicht polymere hydrolysierbare Silanverbindung, wobei das Gewichtsverhältnis von Polymerem mit hydrolysierbaren Silan-Endgruppen zu Phenolharz größer als 2 : 1 sein soll.

Aus der EP 2 009 063 A ist eine zwei oder mehrkomponentige Vergussmasse umfassend a) eine erste Komponente A, enthaltend ein silanterminiertes Präpolymer auf der Basis eines organischen Polymers und ein als Vernetzer und/ oder Haftvermittler wirkendes Silan, sowie b) eine zweite Komponente B, enthaltend ein silanterminiertes Präpolymer auf der Basis eines organischen Polymers und Wasser bekannt. Der pH-Wert der Komponente B soll dabei in einem Bereich von 3 bis 7 liegen. Auch diese Schrift schlägt die Verwendung von metallorganischen Verbindungen wie Zinn-, Aluminium-, Bismut-, Zirkonium-, Blei-, Eisen- oder Titanverbindungen als Katalysatoren vor.

Aus WO 2008/027499 A2 ist die Verklebung fester polymerer Substrate bekannt, wobei die für die Verklebung zum Einsatz kommenden härtbaren Zusammensetzungen hydroxylterminierte PolyurethanPräpolymere, Isocyanatosilan und gegebenenfalls weitere Additive enthalten. Letztere umfassen Katalysatoren, wobei bevorzugt Zinnkatalysatoren zum Einsatz kommen. Ein Einsatz im Bereich der Fertigung oder Befestigung von Photovoltaik-Modulen wird nicht beschrieben.

Auch in WO 2006/130592 A1, DE 10 2005 041954 A1, US 2007/060732 A1, WO 2005/108520 A1, US 2004/180155 A1, US 6750309 B1, WO 03/059981 A1, DE 199 23 300 A1, WO 2006/015659 A2, EP 1746133 A1, DE 10 2005 026085 A1, DE 10 2004 022150 A1 und DE 195 17 452 A1 werden Klebstoffe auf Basis silanterminierter Polymere offenbart. Es ist jeweils die Zugabe der für diese Systeme üblichen Katalysatoren erwähnt. Keines der Dokumente beschäftigt sich jedoch mit der elastischen Verklebung von Substraten bei der Fertigung von Photovoltaik-Modulen oder bei der Befestigung von PhotovoltaikModulen auf Dach- oder sonstigen Flächen.

Mit der Zunahme an zu verklebenden Untergründen und mit den gestiegenen Anforderungen an die Verklebungen/Abdichtungen werden auf Grund des breiten Haftspektrums sowohl bei industriellen Anwendungen als auch im handwerklichen Bereich immer häufiger silylterminierte Kleb/Dichtstoffsysteme (zum Beispiel "MS-Polymere", α-Silane, SPUR, sogenannte Hybride) verwendet.

Auch in der Photovoltaikindustrie werden neben plastischen Butyldichtstoffen oder hitzehärtenden EVA- Klebstoffen auch Klebstoffe oder Dichtstoffe auf Basis silylterminierter Prepolymerer verwendet. Vorzugsweise basierten die letztgenannten bisher fast ausschließlich auf der Basis der sogenannten MS-Polymere (Fa. Kaneka). Die Kleb- und Dichtstoffe werden dort sowohl bei der Photovoltaikmodulfertigung als auch beim Befestigen der fertigen Photovoltaikmodule eingesetzt. Eine an Bedeutung immer stärker werdende Untergruppe der Photovoltaikmodule (abgekürzt: PV-Module) sind die so genannten Strom erzeugenden Solarfolien (z.B. "Triple-Junction-Technology" der Firma Unisolar), auch flexible PV-Module genannt. Diese bestehen aus den photoaktiven Schichten, die in Kunststoff- und/oder Metallfolien eingebettet sind.

Eine Möglichkeit des prinzipiellen Aufbaus eines PV-Moduls mit "Triple-Junction-Technology" sei kurz beschrieben:

Die Solar-Zellen enthalten als photoaktive Schichten eine blau-, eine grün- und eine rot- empfindliche Dünnfilm- Siliziumschicht, die jeweils bevorzugt den blauen, gelb/grünen und roten Anteil des Sonnenlichtes absorbieren. Diese Schichten werden in einem Rolle- zu- Rolle Vakuum Abscheidungsprozess auf einem Edelstahlsubstrat abgeschieden und in Polymerschichten eingebettet. Auf der blauempfindlichen Schicht ist eine transparente Schicht eines leitfähigen Oxidfilms sowie als Abschluss eine EVA (Ethylen-Vinylacetat) Schicht sowie eine ETFE Fluorpolymerschicht, z.B. TEFZEL® von DuPont aufgebracht. Auf der Unterseite der Edelstahlschicht schließen sich eine EVA- Schicht und eine ggf. faserverstärkte Polymerfolie - eine so genannte Polymer-Rear-Foil - an.

Diese Solarfolien haben im Vergleich zu konventionellen, glasgeschützten PV-Modulen ein sehr geringes Eigengewicht und sind infolge der hohen Flexibilität auch als Rollenware erhältlich. Hersteller dieser Solarfolien sind zum Beispiel die Firmen Unisolar, Flexcell, Fuji und andere. Diese flexiblen Solarfolien wiederum werden von Dachzubehörlieferanten (z. B. die Firmen Alwitra, Renolit in Belgien, FLAG in Italien) zur Herstellung von BIPV-Systemen (Building Integrated Photovoltaik) verwendet.

Die Dachzubehörlieferanten rüsten ihre Dachabdichtbahnen (z.B. für Flachdächer) bzw. Paneele für Metalldächer mit den oben genannten flexiblen Solarfolien aus. Hierbei wird die flexible Solarfolie mit Hilfe eines Kleb- /Dichtstoffs mit der Dachabdichtbahn bzw. mit dem Metallpaneel teilweise oder vollflächig verbunden. Die so mit Solarfolien ausgerüsteten Paneele oder Abdichtbahnen werden dann auf oder an den Gebäuden meist mechanisch angebracht und sorgen für die Dichtigkeit der Gebäude und produzieren "nebenbei" elektrischen Strom.

Die in der Photovoltaikindustrie eingesetzten Butyldichtstoffe haben den Nachteil, dass sie nur eine geringe Festigkeit aufweisen und somit besonders bei erhöhter Temperatur zum Versagen führen können. Die EVA-Kleb- und Dichtstoffe erfordern Aushärtebedingungen von 60 Minuten bei 100 bis 160° C. Diese langen Prozesszeiten verringern die Produktivität des Fertigungsprozesses deutlich. Die bislang zum Einsatz kommenden Kleb- oder Dichtstoffe auf Basis silylterminierter Prepolymerer liefern zwar elastische Verklebungen mit auch bei erhöhter Temperatur ausreichender Festigkeit, unter Langzeitbelastungen bei Temperaturen von 80° C und / oder Temperatur- und Feuchtebelastungen von 85° C und 85% relativer Luftfeuchtigkeit kommt es jedoch zu einer Delaminierung der flexiblen Solarfolie, insbesondere der Polymer-Rear-Foil.

Es besteht also Bedarf an ein- oder mehrkomponentigen Kleb-/Dichtstoffen mit verbesserten Eigenschaften nach Langzeitbelastungen, wie sie in der Photovoltaikindustrie anzutreffen sind.

Die erfindungsgemäße Lösung dieser Aufgabe ist den Patentansprüchen zu entnehmen. Sie besteht im wesentlichen in der Verwendung einer ein- oder mehrkomponentigen Kleb-/ Dichtstoff-Zusammensetzung enthaltend mindestens ein silanterminiertes Prepolymer mit speziellen Endgruppen, die frei ist von organischen Schwermetallkatalysatoren bei der Fertigung und Befestigung von Photovoltaik-Modulen.

Gegenstand der Erfindung ist daher die Verwendung ein- oder mehrkomponentiger Kleb-/DichtstoffZusammensetzungen, enthaltend mindestens ein silanterminiertes Prepolymer, wobei die Kleb-/Dichtstoff-Zusammensetzung frei ist von organischen Schwermetallkatalysatoren und die Endgruppen des silanterminierten Prepolymers ausgewählt werden aus Methyldialkoxysilylpropyl, Trialkoxysilylpropyl, Methyldialkoxysilylmethyl, Trialkoxysilylmethyl oder deren Mischungen zur elastischen Verklebung von zwei oder mehreren gleichen und/oder verschiedenartigen Substraten bei der Fertigung von Photovoltaik-Modulen, sowie bei der Befestigung von Photovoltaik-Modulen auf Dach- oder sonstigen Flächen.

Unter Methyldialkoxysilylpropyl-Endgruppen werden erfindungsgemäß Gruppen der Formel CH₃(RO)₂Si-CH₂-CH₂-CH₂-, unter Trialkoxysilylpropyl-Endgruppen Gruppen der Formel (RO)₃Si-CH₂-CH₂-CH₂-, unter Methyldialkoxysilylmethyl-Endgruppen Gruppen der Formel CH₃(RO)₂Si-CH₂- und unter Trialkoxysilyl-methyl-Endgruppen Gruppen der Formel (RO)₃Si-CH₂- verstanden, wobei R in den Formeln jeweils für einen Alkylrest, vorzugsweise einen C₁- bis C₈-Alkylrest, besonders bevorzugt Methyl, Ethyl oder n-Propyl und ganz besonders bevorzugt für Methyl oder Ethyl steht.

Schwermetalle im Sinne dieser Erfindung sind solche Metalle mit einer Dichte von größer als 3,5 g*cm⁻³.

Als frei von organischen Schwermetallkatalysatoren werden erfindungsgemäß Kleb-/Dichtstoff-Zusammensetzungen verstanden, deren Schwermetallgehalt, jeweils bezogen auf das Gesamtgewicht der Kleb-/Dichtstoff-Zusammensetzung und berechnet als Metall, maximal 0,01 Gew.-%, vorzugsweise maximal 0,001 Gew.-%, besonders bevorzugt maximal 0,0001 Gew.-% und ganz besonders bevorzugt 0 Gew.-% beträgt.

Vorzugsweise sind die Endgruppen des silanterminierten Prepolymers ausgewählt aus Trialkoxysilylpropyl, Methyldialkoxysilylmethyl, Trialkoxysilylmethyl oder deren Mischungen. Besonders bevorzugt enthalten die ein- oder mehrkomponentigen Kleb-/ Dichtstoff-Zusammensetzungen ausschließlich solche silanterminierte Prepolymere, deren Endgruppen ausgewählt werden aus Trialkoxysilylpropyl, Methyldialkoxysilylmethyl, Trialkoxysilylmethyl oder deren Mischungen.

Die ein- oder mehrkomponentigen Kleb-/Dichtstoff-Zusammensetzungen lassen sich prinzipiell vorteilhaft bei der Herstellung und Befestigung jeglicher Photovoltaik-Module, d.h. klassischer starrer Module, wie auch flexiblen PV-Modulen einsetzen. Bevorzugt ist die Verwendung bei der Herstellung und Befestigung flexibler PV-Module.

Als zu verklebende oder zu versiegelnde Substrate kommen dabei insbesondere Bauteile aus ggf. lackierten Metallen, wie Aluminium, Stahl, insbesondere Edelstahl, verzinkten Stählen, vorbehandelten, insbesondere phosphatierten Stählen, Kupfer oder Messing, aus Glas, aus Kunststoff, insbesondere Kunststoffbahnen für Dachanwendungen, wie z.B. Evalon ® (Hochpolymerlegierung aus Ethylen-Vinyl-Acetat-Terpolymer (EVA) und Polyvinylchlorid (PVC), Fa. Alwitra) und/oder aus Holz oder Holzwerkstoffen in Frage.

Besonders bevorzugt werden die ein- oder mehrkomponentigen Kleb-/Dichtstoff-Zusammensetzungen bei der Herstellung und Befestigung flexibler PV-Module zur elastischen Verklebung und Abdichtung von EVA-Schicht und Polymer-Rear-Foil eingesetzt, wobei es sich vorzugsweise bei der EVA-Schicht um eine Schicht aus reinem EVA oder einer Hochpolymerlegierung aus Ethylen-Vinyl-Acetat-Terpolymer (EVA) und Polyvinylchlorid (PVC) und bei der Polymer-Rear-Foil um eine Schicht aus Polyester, PVC, Polychloropren, einem Polyolefin oder Polyethylenterephthalat (PET), vorzugsweise um eine Schicht aus PET, handelt.

Vorzugsweise kommt dabei eine zweikomponentige Kleb-/Dichtstoff-Zusammensetzung, bestehend aus Komponente A und Komponente B, zum Einsatz, wobei vor der Applikation die Komponente A mit der Komponente B in einem Verhältnis von 1 : 1 bis 200 : 1 Gewichtsteilen gemischt wird.

In einer bevorzugten Ausführungsform der erfindungsgemäß eingesetzten zweikomponentigen Kleb-/Dichtstoff-Zusammensetzung besteht sie aus einer Komponente A, enthaltend mindestens ein silanterminiertes Prepolymer, und einer Komponente B, enthaltend Wasser sowie mindestens ein Verdickungsmittel.

Die erfindungsgemäße bevorzugt eingesetzte zweikomponentige Kleb-/Dichtstoff-Zusammensetzung enthält mindestens ein silanterminiertes Prepolymer dessen Endgruppen ausgewählt werden aus Methyldialkoxysilylpropyl, Trialkoxysilylpropyl, Methyldialkoxysilylmethyl, Trialkoxysilylmethyl oder deren Mischungen.

Bei den Endgruppen handelt es sich demnach um Gruppen der Formel CH₃(RO)₂Si-CH₂-CH₂-CH₂-, Gruppen der Formel (RO)₃Si-CH₂-CH₂-CH₂-, Gruppen der Formel CH₃(RO)₂Si-CH₂- und/oder Gruppen der Formel (RO)₃Si-CH₂-, wobei R in den Formeln jeweils für einen Alkylrest, vorzugsweise einen C₁- bis C₈-Alkylrest, besonders bevorzugt Methyl, Ethyl oder n-Propyl und ganz besonders bevorzugt für Methyl oder Ethyl steht.

Bevorzugt kommen silanterminierte Prepolymere zum Einsatz, die mindestens eine, vorzugsweise 2 oder 3 der genannten reaktiven Endgruppe(n) aufweisen.

Besonders bevorzugt sind silanterminierte Prepolymere der Formel (1):

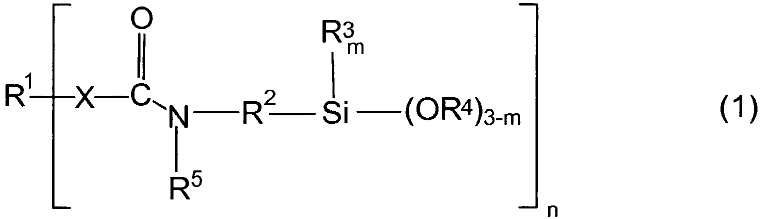

Darin ist R¹ der zwei-, 3- oder 4-wertige Rest eines Polymers, insbesondere eines Polymers mit Polyoxyalkylen-Rückgrat, X ist -O- oder -NH, vorzugsweise -O-, R² ist -(CH₂)- oder -(CH₂)₃-, m ist 0 oder 1 und n ist 2, 3 oder 4. Wenn R² für -(CH₂)₃- steht, ist m vorzugsweise gleich 0. R³ steht für Methyl. R⁴ ist ein C₁- bis C₈- Alkylrest, besonders bevorzugt ein C₁- bis C₄- Alkylrest, weiter bevorzugt Methyl, Ethyl oder n-Propyl und ganz besonders bevorzugt Methyl oder Ethyl. R⁵ kann H oder ein Alkyl-, Cycloalkyl- oder Arylrest sein. Vorzugsweise steht R⁵ für H.

Ganz besonders bevorzugt ist mindestens ein silanterminiertes Prepolymer der einkomponentigen Zusammensetzung oder der Komponente A ein silanterminiertes Polyoxyalkylen mit N-(Dimethoxy-(methyl)silylmethyl)carbamat-Endgruppen, d.h. ein Prepolymer der Formel (1), wobei R¹ für einen zwei-, 3- oder 4-wertigen Rest eines Polyoxyalkylen, X für -O-, R² für -(CH₂)-, m für 1, n für 2, 3 oder 4, R³ für Methyl und R⁴ ebenfalls für Methyl steht. R⁵ kann H oder ein Alkyl-, Cycloalkyl- oder Arylrest sein. Vorzugsweise steht R⁵ für H.

Die eingesetzten silanterminierten Prepolymeren haben vorzugsweise einen Molekulargewicht (Mₙ) zwischen 1000 und 50 000, besonders bevorzugt 4000 bis 20 000.

Die erfindungsgemäß einzusetzenden silanterminierten Prepolymeren können in an sich bekannter Weise hergestellt werden. Beispielsweise können sie durch Umsetzung von Polyoxyalkylen-Polyolen, insbesondere den 2-, 3- oder 4-wertigen Polypropylenglycolen, mit entsprechenden Isocyanatosilanen erhalten werden. Es sind dies insbesondere Methyldimethoxysilylmethylisocyanat, Methyldiethoxysilylmethylisocyanat und Trimethoxysilylpropylisocyanat. In Formel (1) ist -X- in diesem Falle -O- und R⁵ ist Wasserstoff.

Polyoxyalkylene, die Polyether als Polymergerüst enthalten, besitzen nicht nur an den Endgruppen, sondern auch im Polymerrückgrat eine flexible und elastische Struktur. Damit kann man Zusammensetzungen herstellen, die sehr gute elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Besonders bevorzugt werden daher Polyethylenoxide und/oder Polypropylenoxide eingesetzt.

Nach einer bevorzugten Ausführungsform der erfindungsgemäßen Zusammensetzung beträgt das Molekulargewicht Mₙ des Polymergerüsts zwischen 4000 und 30000 g/mol (Dalton). Weitere besonders bevorzugte Molekulargewichtsbereiche sind 5000 bis 20000 g/mol, ganz besonders bevorzugt sind 8000 bis 19000 g/mol.

Diese Molekulargewichte sind besonders vorteilhaft, da Zusammensetzungen mit diesen Molekulargewichten Viskositäten aufweisen, die eine leichte Verarbeitbarkeit ermöglichen.

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5, insbesondere weniger als 1,3, aufweisen.

Unter dem Molekulargewicht Mₙ wird das zahlenmittlere Molekulargewicht des Polymeren verstanden. Dieses wird, ebenso wie das gewichtsmittlere Molekulargewicht M_{w}, durch Gelpermeationschromatographie (GPC, auch: SEC) bestimmt. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus. Solche Polyoxyalkylenpolymere haben eine Polydispersität PD (M_{w}/Mₙ) von höchstens 1,7. Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14. In einer bevorzugten Ausführungsform der Erfindung weisen diese Polyether ein mittleres Molekulargewicht (Mₙ) von etwa 4000 bis etwa 30000 auf, insbesondere etwa 5000 bis etwa 20000. Besonders bevorzugt sind Polyether mit mittleren Molekulargewichten von etwa 6000 bis etwa 20000, insbesondere mit mittleren Molekulargewichten von etwa 8000 bis etwa 19000.

Alternativ sind die erfindungsgemäß einzusetzenden silanterminierten Prepolymeren aus den entsprechenden Isocyanat- funktionellen Prepolymeren und Aminosilanen herstellbar. In diesem Falle werden die vorgenannten bevorzugten Polyoxyalkylen- Polyole mit Diisocyanaten in stöchiometrischen Überschuß zu NCO-terminierten Prepolymeren umgesetzt, die dann in einer Folgereaktion mit den entsprechenden Aminosilanen zu den silanterminierten Prepolymeren umgesetzt werden.

Als Diisocyanate eigenen sich prinzipiell eine Vielzahl kommerziell verfügbare Diisocyanate. Beispielhaft erwähnt seien Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendiisocyanat (XDI), Tetramethylxylylendiisocyanat (TMXDI), 1,3und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bischlormethylether-4,4'-diphenyldiisocyanat, schwefelhaltige Diisocyanate, wie sie durch Umsetzung von 2 mol Diisocyanat mit 1 mol Thiodiglycol oder Dihydroxydihexylsulfid erhältlich sind, die Diisocyanate der Dimerfettsäuren, oder Gemische aus zwei oder mehr der genannten Diisocyanate, in Frage.

Das Aminosilan kann dabei beispielsweise ausgewählt werden aus 3-Aminopropyl-trimethoxysilan, 3Aminopropyl-triethoxysilan (beispielsweise Dynasilan AMMO, Fa. Evonik oder Geniosil GF 96, Fa. Wacker), N-(n-butyl)-3-Aminopropyltrimethoxysilan, N-Cyclohexylaminomethylmethyldiethoxysilan, N-Cyclohexylaminomethyltriethoxysilan, N-Cyclohexylaminomethylmethyldimethoxysilan, N-Cyclohexylaminomethyltrimethoxysilan, N-Phenylaminomethyltrimethoxysilan (z. B. Geniosil XL 973, Fa. Wacker), N-Cyclohexyl-3-aminopropyltrimethoxysilan, 1-Anilinomethyldimethoxymethylsilan (z. B. Geniosil XL972, Fa. Wacker).

Die genannten silanterminierten Prepolymere können zur Herstellung einkomponentiger erfindungsgemäß verwendeter feuchtigkeitshärtender Kleb-/Dichtstoff-Zusammensetzungen eingesetzt werden. Solche Kleb-/Dichtstoff-Zusammensetzungen sind insbesondere für Randversiegelung oder Verklebung von Modulen angezeigt, da hierbei keine Komponenten gemischt werden müssen und die Aushärtung durch Diffusion von Wasserdampf aus dem Randbereich eine hinreichend schnelle Aushärtung gewährleistet. Für großflächige Verklebungen nicht poröser Substrate wird der Fachmann jedoch die zwei- oder mehrkomponentige Ausführungsform wählen, um einen hinreichende Aushärtung der Klebefuge sicherzustellen.

In der 2-komponentigen Ausführungsform der erfindungsgemäß eingesetzten Kleb-/Dichtstoffe-Zusammensetzung enthält die Komponente B vorzugsweise mindestens Wasser sowie mindestens ein Verdickungsmittel. Die Komponente B enthält dabei vorzugsweise 1 bis 20 Gew.-%, besonders bevorzugt 3 bis 15 Gew.-% Wasser, wobei sich diese Mengenangabe auf das Gesamtgewicht der Komponente B bezieht. Das Wasser ist dabei vorzugsweise an anorganischen Verdickungsmitteln adsorbiert oder in organischen Verdickungsmitteln gelöst bzw. gequollen. Weiterhin kann die Komponente B ein Oligomer enthalten, vorzugsweise ist dies ein Polypropylenglycol, Polyethylenglycol oder ein Copolymer aus Propylenoxid und Ethylenoxid. Es können auch Mischungen verschiedener Polyoxyalkylene eingesetzt werden. Die Molekulargewichte des oder der Polyoxyalkylene liegen vorzugsweise zwischen 1000 und 20 000, besonders bevorzugt zwischen 2000 und 12 000.

Als Verdickungsmittel für die bevorzugte Ausführungsform werden wasserlösliche bzw. wasserquellbare Polymere oder anorganische Verdickungsmittel bevorzugt. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine, Casein. Beispiele für organische voll- oder teilsynthetische Verdickungsmittel sind Carboxymethylcellulose, Celluloseether wie z.B. Tylose, Hydroxyethylcellulose, Hydroxypropylcellulose, Poly(meth)acrylsäurederivate, Polyvinylether, Polyvinylalkohol, Polyamide, Polyimine. Beispiele für anorganische Verdickungsmittel bzw. Adsorptionsmittel für das Wasser sind Polykieselsäuren, hochdisperse, pyrogene, hydrophile Kieselsäuren, Tonmineralien wie Montmorillonit, Kaolinit oder Halloysit, sowie Aluminiumhydroxid, Aluminiumoxidhydrat, Aluminiumsilikate, Talkum, Quarzmineralien, Magnesiumhydroxid oder dergleichen.

Vorzugsweise ist die Komponente B so ausgebildet, dass die Komponente A mit der Komponente B in einem Verhältnis von 1 : 1 bis 200 : 1 Gewichtsteilen gemischt wird, um eine rasche und vollständige Aushärtung zu gewährleisten. Besonders bevorzugt werden Komponente A und Komponente B in einem Verhältnis von 1 : 1 bis 100 : 1 Gewichtsteilen, weiter bevorzugt von 5 : 1 bis 20 : 1 gemischt.

Sowohl die Komponente A als auch ggf. die Komponente B können zusätzlich Füllstoffe, Weichmacher, Alterungsschutzmittel, Rheologiehilfsmittel und weitere übliche Hilfs- und Zusatzstoffe enthalten.

Als Weichmacher können alle für Kleb-/Dichtstoffe üblichen Weichmacher verwendet werden, z. B. die diversen Phthalsäureester, Arylsulfonsäureester, Alkyl- und/oder Arylphosphate sowie die Dialkylester der aliphatischen und aromatischen Dicarbonsäuren.

Als Weichmacher geeignet sind unter anderem Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glycolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester (z.B. "Mesamoll", Alkylsulfonsäurephenylester, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure. Geeignet sind auch niedermolekulare Kohlenwasserstoffharze auf der Basis von C₉Kohlenwasserstoffen, wie zum Beispiel NOVARES L 100, NOVARES LA 300, NOVARES LC 10 NOVARES XK 096 oder NOVARES XK 114 der Fa. Rütgers.

Beispielsweise eignen sich von den Phthalsäureestern Dioctylphthalat (DOP), Dibutylphthalat, Diisononylphthalat (DINP), Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat.

Als Füllstoffe und/oder Pigmente können alle gängigen beschichteten oder unbeschichteten Füllstoffe und/oder Pigmente eingesetzt werden, vorzugsweise sollten diese jedoch gering in ihrem Wassergehalt sein. Beispiele für geeignete Füllstoffe sind Kalksteinmehl, natürliche, gemahlene Kreiden (Calciumcarbonate oder Calcium-Magnesiumcarbonate), gefällte Kreiden, Talk, Glimmer, Tone, Magnesium- oder Aluminiumhydroxid, Kaoline oder Schwerspat. Beispiele für geeignete Pigmente sind Titandioxid, Eisenoxide oder Ruß.

Alterungsschutzmittel oder "Stabilisatoren" im Sinne dieser Erfindung sind Antioxidantien, UVStabilisatoren oder Hydrolyse-Stabilisatoren zu verstehen. Beispiele hierfür sind die handelsüblichen sterisch gehinderten Phenole und/oder Thioether und/oder substituierten Benzotriazole z. B. Tinuvin 327 oder 328 (Fa. Ciba Specialty Chemicals) und/oder Amine vom "HALS"-Typ (Hindered Amine Light Stabilizer) z. B. Tinuvin 770 (Fa. Ciba Specialty Chemicals). Es kann im Rahmen der vorliegenden Erfindung bevorzugt sein, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Der erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als rheologische Hilfsmittel können z. B. hydrogenisiertes Rizinusöl (z.B. Rilanit, Fa. Cognis Deutschland GmbH, Düsseldorf) Fettsäureamide oder quellbare Kunststoffe wie PVC Verwendung finden.

Als weitere Zusatzstoffe enthalten die erfindungsgemäß eingesetzten Zusammensetzungen, hier insbesondere die Komponente A, vorzugsweise Haftvermittler und / oder Reaktivverdünner in Form von niedermolekularen organofunktionellen Silanen. Besonders bevorzugt sind dabei 3-Glycidoxypropyltrialkoxysilan - insbesondere 3-Glycidoxy-propyltrimethoxysilan (Dynasylan GLYMO, Fa. Evonik) oder 3-Glycidoxy-propyltriethoxysilan (Dynasylan GLYEO, Fa. Evonik), 3-Acryloxypropyltrialkoxysilan, 3Aminopropyltrialkoxysilan, Vinyltrialkoxysilan, Phenylaminopropyltrialkoxysilan, Aminoalkyltrialkoxydisilan, N(2- Aminoethyl)-3-aminopropyltrialkoxysilan, 3-Glycidoxy-propylalkyldialkoxysilan, 3-Acryloxypropylalkyldialkoxysilan, 3-Aminopropyl-alkyldialkoxysilan, Vinyl-alkyldialkoxysilan, Phenylaminopropylalkyldialkoxysilan, Aminoalkylalkyldialkoxydisilan, N(2-Aminoethyl)-3-aminopropylalkyl-dialkoxysilan, iButylmethoxysilan, Bis(trimethoxysilylpropyl)amin (Dynasylan1124, Fa. Evonik), N-(Trimethoxysilylmethyl)-O-methylcarbamat, N-Dimethoxy(methyl)silylmethyl-O-methyl-carbamat, (N-Phenylaminomethyl)trimethoxysilan, (N-Cyclohexylaminomethyl)triethoxysilan, (N-Cyclohexylaminomethyl)methyldiethoxysilan, (N-Phenylaminomethyl)methyldimethoxysilan, (N-Phenylaminomethyl)-trimethoxysilan, Teilhydrolysate der vorgenannten Silane oder Mischungen der vorgenannten Silane und / oder Teilhydrolysate.

Die Komponente B kann als weitere Zusatzstoffe noch Verdünner bzw. Lösungsmittel enthalten. Beispiele für geeignete Verdünner sind Ethylenglycol, Diethylenglycol, Neopentylglycol, Hexandiol, Butandiol, Propylenglycol, Glycerin, Triethylenglycol, Tetraethylenglycol, Polyethylenglycol, oder deren Monomethylether sowie Mischungen der vorgenannten Verbindungen oder Phosphatweichmacher (z.B. TEP. TOF).

Die Herstellung der erfindungsgemäß eingesetzten Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate, wobei die Komponente B bei den zweikomponentigen Ausführungsformen selbstverständlich separat hergestellt und verpackt werden muss.

Die erfindungsgemäß eingesetzten Zusammensetzungen können typischerweise enthalten:
Komponente A
   silanterminiertes Prepolymer: 15,0 - 70,0 Gew.%, vorzugsweise 20 - 50 Gew.%,
   Weichmacher: 0 bis 20 Gew.%
   Füllstoffe: 0 - 50 Gew.%,
   Rheologiehilfsmittel: 0 - 4 Gew.%,
   Pigmente: 0 -10 Gew.%,
   Stabilisatoren: 0 bis 5 Gew.%,
   Haftvermittler / Reaktivverdünner: 0,1 bis 5 Gew.%,
   wobei sich die Summe der Gesamtbestandteile der Komponente A auf 100 Gew. % ergänzt.

Im Falle der zweikomponentigen Ausführung:
Komponente B:
   Wasser: 1,0 bis 20,0 Gew.%,
   Oligomer: 20,0 bis 50,0 Gew.%,
   Füllstoffe: 10,0 bis 50,0 Gew.%,
   Verdünner: 0 bis 5,0 Gew.%,
   Verdickungsmittel:0,1 bis 5,0 Gew.%,
   wobei sich die Summe der Gesamtbestandteile der Komponente B auf 100 Gew.% ergänzt.

Die Komponenten A und B sind dabei vor der Anwendung je nach spezifischer Ausführungsform in einem Verhältnis von 1 : 1 bis 200 : 1 Gewichtsteilen, vorzugsweise 1 : 1 bis 100 : 1 Gewichtsteilen zu mischen.

Anhand der nachfolgenden Beispiele soll die Erfindung näher erläutert werden. Alle Mengenangaben sind in Gewichtsprozent, falls nicht anders angegeben.

### Beispiele

### Beispiel 1 und 2

In einem Schnellmischer wurden auf Basis eines α-Silan- terminierten Polypropylenglycols mit N-(Dimethoxy(methyl)silylmethyl)carbamat- Endgruppen (30 000 mPa*s bei 25 °C, nach DIN 51562) unter Feuchtigkeitsausschluss Komponenten A eines ein- bzw. zweikomponentigen Kleb- / Dichtstoffes hergestellt:

**Tabelle 1**

| **Beispiel** | **1** | **2** |
|---|---|---|
| Alphasilan-Polymer | 29,61 | 29,16 |
| DINP | 9,35 | 9,21 |
| Tinuvin - Lösung | 1,25 | 1,23 |
| Rilanit | 2,08 | 2,05 |
| Titandioxid getrocknet | 6,23 | 6,14 |
| Kreide, Omya BLH getrocknet | 48,83 | 48,08 |
| Tinuvin 328 | 0,05 | 0,05 |
| Dynasylan GLYMO | 0,52 | 2,05 |
| Dynasylan 1124 | 2,08 | 2,05 |
| | | |
| Summe | 100,00 | 100,00 |

### Beispiel 3

Eine Härterkomponente B wurde durch Mischen der nachfolgenden Bestandteile hergestellt:

**Tabelle 2**

| | |
|---|---|
| Polypropylenglycol 6300 (Acclaim, Fa. Bayer) | 48,64 |
| Calciumcarbonat | 38,00 |
| Monoethylenglycol, destilliert | 3,00 |
| Tylose MH | 0,36 |
| Wasser | 10,00 |
| | |
| Summe | 100,00 |

### Beispiele 4 bis 7

In den nachfolgenden Beispielen 4 und 6 wurden die Komponenten A der Beispiele 1 und 2 als einkomponentige bzw. in den Beispielen 5 und 7 gemeinsam mit der Komponente B des Beispiels 3 auf Verträglichkeit und Härtungsverhalten mit Solarmodulsubstraten und Metallen (Aluminium 99,5 Reinheit) getestet.

**Tabelle 3**

| **Beispiel** | **4** | **5** | **6** | **7** | **MS-Dichtstoff** | **MS-Dichtstoff** |
|---|---|---|---|---|---|---|
| Ausführung (1c oder 2c) | 1c | 2c | 1c | 2c | 1c | 2c |
| Offene Zeit (min) | - | 15-20 | - | ca. 15 | - | 30-40 |
| | | | | | | |

| **Shore A** | | | | | | |
|---|---|---|---|---|---|---|
| 1d NK | 33 | 47 | 34 | 46 | 20 | 18 |
| 7d NK | 53 | 49 | 54 | 50 | 30 | 28 |

| Laqerung: 7d NK | | | | | | |
|---|---|---|---|---|---|---|
| Haftung auf Unisolar-Modul (nach Corona Vorbehandlung) | 1 | 1 | 1 | 1 | 1 | 1 |
| Haftung auf Alu 99.5 | 1 | 1 | 1 | 1 | 1 | 1 |
| Haftung zur Evalon (EVA-Bahn) | 1 | 1 | 1 | 1 | 1 | 1 |
| Verträglichkeit mit der Folie = Haftung Folie / Metallteil d. Folie | kein Angriff der Folie sichtbar | kein Angriff der Folie sichtbar | kein Angriff der Folie sichtbar | kein Angriff der Folie sichtbar | kein Angriff der Folie sichtbar | kein Angriff der Folie sichtbar |
| | | | | | | |
| | | | | | | |

| **Lagerung: 7d NK+ 21d 80°C** | | | | | | |
|---|---|---|---|---|---|---|
| Haftung auf Unisolar-Modul (nach Corona Vorbehandlung) | 1 | 1 | 1 | 1 | 4 | 4 |
| Haftung auf Alu 99.5 | 1 | 1 | 1 | 1 | 1 | 1 |
| Haftung Klebstoff zu Evalon | 1 | 1 | 1 | 1 | 1 | 1 |
| | | | | | | |
| Verträglichkeit mit Unisolar-Modul | gegeben | gegeben | gegeben | gegeben | Delaminierung | Delaminierung |

| | | | | | | |
|---|---|---|---|---|---|---|
| In der Tabelle 3 bedeuten: 1c Härtung nur mittels Luftfeuchtigkeit 2c Härtung mit B-Komponente NK Normklima; 50%rh/23°C Haftung 1 = 100 % kohäsiver Bruch (= i.O.), 4 = > 80 % adhäsiver Bruch (n. i.O.) | | | | | | |

In der nachfolgenden Tabelle 4 sind die Festigkeitseigenschaften der Klebstoffe gemäß den Beispielen 5 und 7 (Mischungsverhältnis Komponente A zu B 10 : 1) vor und nach Wärmealterung zusammengefasst.

Dazu wurden die oben genannten Mischungen hergestellt und zu flachen Platten mit einer Schichtstärke von 2 mm verarbeitet. Aus diesen wurden nach 7 Tagen Lagerung (23 °C, 50 % relative Luftfeuchtigkeit) Probenkörper (S2-Prüfkörper) ausgestanzt und die mechanischen Daten (E-Module bei 10, 25, 50 und 100 % Dehnung, Bruchdehnung und Reißfestigkeit) in Anlehnung an DIN EN 27389 und DIN EN 28339 bestimmt.

**Tabelle 4**

| **Beispiel** | | **5** | **7** |
|---|---|---|---|
| Offene Zeit (min) | | 15-20 | 15-20 |
| Shore- A | | | |
| nach 1d NK | | 45 | 38 |
| nach 7d NK | | 52 | 50 |

| Mechanik S2 Prüfkörper | | | |
|---|---|---|---|
| 10% Modul N/mm² | 1d NK | 0,30 | 0,22 |
| 25% Modul N/mm² | 1d NK | 0,58 | 0,41 |
| 50% Modul N/mm² | 1d NK | 0,82 | 0,63 |
| 100% Modul N/mm² | 1d NK | 0,87 | 0,72 |
| Reißfestigkeit N/mm² | 1d NK | 0,88 | 0,80 |
| Dehnung % | 1d NK | 97 | 163 |

| Mechanik S2 Prüfkörper | | | |
|---|---|---|---|
| 10% Modul N/mm² | 7d NK | 0,35 | 0,29 |
| 25% Modul N/mm² | 7d NK | 0,67 | 0,57 |
| 50% Modul N/mm² | 7d NK | 0,94 | 0,83 |
| 100% Modul N/mm² | 7d NK | 1,03 | 0,93 |
| Reißfestigkeit N/mm² | 7d NK | 1,03 | 0,97 |
| Dehnung % | 7d NK | 99 | 120 |

Aus den in den Tabellen 3 und 4 zusammengefassten Testergebnissen sind die hervorragenden Eigenschaften der Kleb- / Dichtstoffe bei der zur Verklebung von Substraten, die in BIPV Verwendungen zum Einsatz kommen, ersichtlich.

In einem Vergleichsversuch wurde ein Kleb-/ Dichtstoff des Standes der Technik (MS-Dichtstoff) getestet. Der Dichtstoff basiert auf γ-Silan-terminierten Polypropylenglycolen mit Dimethoxy(methyl)silyl-Endgruppen und weist 0,3 Gew.-% eines üblichen Zinnkatalysators auf. Die Verklebung wies zwar brauchbare Anfangswerte auf, nach einer Woche Wärmelagerung bei 80 °C wurde jedoch vollständige Delamination des Klebstoffs an der Polymer-Rear-Foil des Solarmoduls beobachtet. Derartige Kleb-/ Dichtstoffe des Standes der Technik sind somit zur Montage von BIPV-Systemen ungeeignet.

## Patentansprüche

1. Verwendung einer ein- oder mehrkomponentigen Kleb-/Dichtstoff-Zusammensetzung, enthaltend mindestens ein silanterminiertes Prepolymer, wobei die Kleb-/Dichtstoff-Zusammensetzung einen Schwermetallgehalt, jeweils bezogen auf das Gesamtgewicht der Kleb-/Dichtstoff-Zusammensetzung und berechnet als Metall, von maximal 0,01 Gew.-% aufweist, und die Endgruppen des silanterminierten Prepolymers ausgewählt werden aus Methyldialkoxysilylpropyl, Trialkoxysilylpropyl, Methyldialkoxysilylmethyl, Trialkoxysilylmethyl oder deren Mischungen, zur elastischen Verklebung von zwei oder mehreren gleichen und/oder verschiedenartigen Substraten bei der Fertigung von Photovoltaik-Modulen sowie bei der Befestigung von Photovoltaik-Modulen auf Dach- oder sonstigen Flächen.

2. Verwendung gemäß Anspruch 1, **dadurch gekennzeichnet, dass** die Zusammensetzung zweikomponentig ausgebildet ist, bestehend aus einer Komponente A, enthaltend mindestens ein silanterminiertes Prepolymer, und einer Komponente B, enthaltend Wasser sowie mindestens ein Verdickungsmittel.

3. Verwendung gemäß Anspruch 1 oder 2, **dadurch gekennzeichnet, dass** mindestens ein silanterminiertes Prepolymer ein silanterminiertes Polyoxyalkylen mit N-(Dimethoxy-(methyl)silylmethyl)carbamat-Endgruppen ist.

4. Verwendung gemäß mindestens einem der vorhergehenden Ansprüche, **dadurch gekennzeichnet, dass** das oder die silanterminierte(n) Prepolymer(en) ein Molekulargewicht (Mₙ) zwischen 1000 und 50 000, vorzugsweise zwischen 4000 und 20 000 aufweisen.

5. Verwendung gemäß mindestens einem der Ansprüche 2 bis 4, **dadurch gekennzeichnet, dass** die Komponente B aus einer Mischung aus mindestens einem Oligomer, Weichmacher(n), Wasser, Verdickungsmitteln und ggf. weiteren Hilfsstoffen besteht.

6. Verwendung gemäß mindestens einem der Ansprüche 2 bis 5, **dadurch gekennzeichnet, dass** als Verdickungsmittel in der Komponente B anorganische Verdickungsmittel aus der Gruppe Polykieselsäuren, hochdisperse pyrogene Kieselsäuren, Aluminiumhydroxid, Aluminiumoxidhydrat, Talkum, Quarzmineralien, Magnesiumhydroxid und Tonmineralien verwendet werden.

7. Verwendung gemäß mindestens einem der Ansprüche 2 bis 5, **dadurch gekennzeichnet, dass** als Verdickungsmittel in der Komponente B organische Verdickungsmittel aus der Gruppe der organischen natürlichen Verdickungsmittel und der organischen voll- oder teilsynthetischen Verdickungsmittel verwendet werden.

8. Verwendung gemäß mindestens einem der vorhergehenden Ansprüche 5 bis 7, **dadurch gekennzeichnet, dass** das Oligomer der Komponente B ein Polyoxyalkylen oder eine Mischung verschiedener Polyoxyalkylene ist, vorzugsweise ein Polypropylenglycol mit einem Molekulargewicht zwischen 1000 und 20 000, bevorzugt zwischen 2000 und 12 000, oder eine Mischung von Polyoxyalkylenen verschiedener Molekulargewichte, ist.

9. Verwendung gemäß mindestens einem der vorhergehenden Ansprüche, **dadurch gekennzeichnet, dass** die eingesetzte Kleb-/Dichtstoff-Zusammensetzung ferner mindestens ein niedermolekulares organofunktionelles Silan enthält, das ausgewählt wird aus 3-Glycidoxy-propyltrialkoxysilan, 3-Acryloxypropyltrialkoxysilan, 3-Aminopropyltrialkoxysilan, Vinyltrialkoxysilan, Phenylaminopropyltrialkoxysilan, Aminoalkyltrialkoxydisilan, N(2- Aminoethyl)-3-aminopropyltrialkoxysilan, 3-Glycidoxy-propylalkyldialkoxysilan, 3-Acryloxypropyl-alkyldialkoxysilan, 3-Aminopropyl-alkyldialkoxysilan, Vinyl-alkyldialkoxysilan, Phenylaminopropyl-alkyldialkoxysilan, Aminoalkylalkyldialkoxydisilan, N(2-Aminoethyl)-3-aminopropylalkyl-dialkoxysilan, i-Butylmethoxysilan, Bis(trimethoxysilylpropyl)amin, N-(Trimethoxysilylmethyl)-O-methylcarbamat, N-Dimethoxy(methyl)silylmethyl-O-methyl-carbamat, (N-Phenylaminomethyl)trimethoxysilan, (N-Cyclohexylaminomethyl)triethoxysilan, (N-Cyclohexylaminomethyl)methyldiethoxysilan, (N-Phenylaminomethyl)methyldimethoxysilan, (N-Phenylaminomethyl)trimethoxysilan, Teilhydrolysaten der vorgenannten Silane oder Mischungen der vorgenannten Silane und / oder Teilhydrolysate.

10. Verwendung gemäß mindestens einem der vorhergehenden Ansprüche 2 bis 9, **dadurch gekennzeichnet, dass** die Komponente B 1 bis 20 Gew.-%, vorzugsweise 3 bis 15 Gew.-% Wasser enthält, jeweils bezogen auf das Gesamtgewicht der Komponente B.

11. Verwendung gemäß mindestens einem der vorhergehenden Ansprüche 2 bis 10, **dadurch gekennzeichnet, dass** das Gewichtsverhältnis der Komponenten A und B 1 : 1 bis 200 : 1, vorzugsweise 1 : 1, bis 100 : 1 beträgt.

## Claims

1. Use of a single- or multi-component adhesive/sealant composition containing at least one silane-terminated prepolymer, wherein the adhesive/sealant composition has a heavy-metal content, based in each case on the total weight of the adhesive/sealant composition and calculated as metal, of at most 0.01 wt%, and the terminal groups of the silane-terminated prepolymer are selected from methyldialkoxysilylpropyl, trialkoxysilylpropyl, methyldialkoxysilylmethyl, trialkoxysilylmethyl, or mixtures thereof, for elastic adhesive bonding of two or more identical and/or different substrates in the context of the production of photovoltaic modules and in the mounting of photovoltaic modules onto roof surfaces or other surfaces.

2. The use according to Claim 1, **characterized in that** the composition is embodied with two components, made up of a component A containing at least one silane-terminated prepolymer and a component B containing water as well as at least one thickening agent.

3. The use according to Claim 1 or 2, **characterized in that** at least one silane-terminated prepolymer is a silane-terminated polyoxyalkylene having N-(dimethoxy(methyl)silylmethyl)carbamate terminal groups.

4. The use according to at least one of the preceding claims, **characterized in that** the silane-terminated prepolymer or prepolymers have a molecular weight (Mₙ) between 1000 and 50,000, preferably between 4000 and 20,000.

5. The use according to at least one of Claims 2 to 4, **characterized in that** component B is made up of a mixture of at least one oligomer, plasticizer(s), water, thickening agents, and optionally further adjuvants.

6. The use according to at least one of Claims 2 to 5, **characterized in that** inorganic thickening agents from the group of polysilicic acids, highly dispersed pyrogenic silicic acids, aluminium hydroxide, aluminium oxide hydrate, talc, quartz minerals, magnesium hydroxide, and clay minerals are used as a thickening agent in component B.

7. The use according to at least one of Claims 2 to 5, **characterized in that** organic thickening agents from the group of natural organic thickening agents and entirely or partly synthetic organic thickening agents are used as a thickening agent in component B.

8. The use according to at least one of the preceding Claims 5 to 7, **characterized in that** the oligomer of component B is a polyoxyalkylene or a mixture of various polyoxyalkylenes, preferably a polypropylene glycol, having a molecular weight between 1000 and 20,000, preferably between 2000 and 12,000, or a mixture of polyoxyalkylenes of various molecular weights.

9. The use according to at least one of the preceding claims, **characterized in that** the adhesive/sealant composition used furthermore contains at least one low-molecular-weight organofunctional silane that is selected from 3-glycidoxypropyltrialkoxysilane, 3-acryloxypropyltrialkoxysilane, 3-aminopropyltrialkoxysilane, vinyltrialkoxysilane, phenylaminopropyltrialkoxysilane, aminoalkyltrialkoxydisilane, N(2-aminoethyl)-3-aminopropyltrialkoxysilane, 3-glycidoxypropylalkyldialkoxysilane, 3-acryloxypropylalkyldialkoxysilane, 3-aminopropylalkyldialkoxysilane, vinylalkyldialkoxysilane, phenylaminopropylalkyldialkoxysilane, aminoalkylalkyldialkoxydisilane, N(2-aminoethyl)-3-aminopropylalkyldialkoxysilane, isobutylmethoxysilane, bis(trimethoxysilylpropyl)amine, N-(trimethoxysilylmethyl)-O-methylcarbamate, N-dimethoxy(methyl)silylmethyl-O-methylcarbamate, (N-phenylaminomethyl)trimethoxysilane, (N-cyclohexylaminomethyl)triethoxysilane, (N-cyclohexylaminomethyl)methyldiethoxysilane, (N-phenylaminomethyl)methyldimethoxysilane, (N-phenylaminomethyl) trimethoxysilane, partial hydrolysates of the aforesaid silanes, or mixtures of the aforesaid silanes and/or partial hydrolysates.

10. The use according to at least one of the preceding Claims 2 to 9, **characterized in that** component B contains 1 to 20 wt%, preferably 3 to 15 wt% water, based in each case on the total weight of component B.

11. The use according to at least one of the preceding Claims 2 to 10, **characterized in that** the weight ratio of components A and B is equal to 1 : 1 to 200 : 1, preferably 1 : 1 to 100 : 1.

## Revendications

1. Utilisation d'une composition adhésive/d'étanchéité à un ou plusieurs composants, contenant au moins un prépolymère terminé par silane, la composition adhésive/d'étanchéité présentant une teneur en métaux lourds, à chaque fois par rapport au poids total de la composition adhésive/d'étanchéité et calculée sous forme de métal, d'au maximum 0,01 % en poids, et les groupes terminaux du prépolymère terminé par silane étant choisis parmi méthyldialcoxysilylpropyle, trialcoxysilylpropyle, méthyldialcoxysilylméthyle, trialcoxysilylméthyle ou leurs mélanges, pour le collage élastique de deux substrats identiques et/ou différents ou plus lors de la fabrication de modules photovoltaïques ainsi que lors de la fixation de modules photovoltaïques sur les surfaces de toit ou sur d'autres surfaces.

2. Utilisation selon la revendication 1, **caractérisée en ce que en ce que** la composition est réalisée à deux composants, constitués par un composant A, contenant au moins un prépolymère terminé par silane, et un composant B, contenant de l'eau ainsi qu'au moins un épaississant.

3. Utilisation selon la revendication 1 ou 2, **caractérisée en ce qu'**au moins un prépolymère terminé par silane est un polyoxyalkylène terminé par silane, présentant des groupes terminaux N-(diméthoxy-(méthyl)silylméthyl)carbamate.

4. Utilisation selon au moins l'une quelconque des revendications précédentes, **caractérisée en ce que** le ou les prépolymère(s) terminé(s) par silane présente(nt) un poids moléculaire (Mₙ) entre 1000 et 50 000, de préférence entre 4000 et 20 000.

5. Utilisation selon au moins l'une quelconque des revendications 2 à 4, **caractérisée en ce que** le composant B est constitué par un mélange d'au moins un oligomère, d'un/de plastifiant(s), d'eau, d'épaississants et le cas échéant d'autres adjuvants.

6. Utilisation selon au moins l'une quelconque des revendications 2 à 5, **caractérisée en ce qu'**on utilise, comme épaississants dans le composant B, des épaississants inorganiques du groupe formé par les poly(acides siliciques), les silices pyrogènes hautement dispersées, l'hydroxyde d'aluminium, l'oxyde d'aluminium hydraté, le talc, les minéraux quartzeux, l'hydroxyde de magnésium et les minéraux argileux.

7. Utilisation selon au moins l'une quelconque des revendications 2 à 5, **caractérisée en ce qu'**on utilise, comme épaississants dans le composant (B), des épaississants organiques du groupe des épaississants organiques naturels et des épaississants organiques complètement ou partiellement synthétiques.

8. Utilisation selon au moins l'une quelconque des revendications précédentes 5 à 7, **caractérisée en ce que** l'oligomère du composant B est un polyoxyalkylène ou un mélange de différents polyoxyalkylènes, de préférence un polypropylèneglycol présentant un poids moléculaire entre 1000 et 20 000, de préférence entre 2000 et 12 000, ou un mélange de polyoxyalkylènes de différents poids moléculaires.

9. Utilisation selon au moins l'une quelconque des revendications précédentes, **caractérisée en ce que** la composition adhésive/d'étanchéité utilisée contient en outre au moins un silane organofonctionnel de bas poids moléculaire, qui est choisi parmi le 3-glycidoxypropyltrialcoxysilane, le 3-acryloxypropyltrialcoxysilane, le 3-aminopropyltrialcoxysilane, le vinyltrialcoxysilane, le phénylaminopropyltrialcoxysilane, l'aminoalkyltrialcoxydisilane, le N(2-aminoéthyl)-3-aminopropyltrialcoxysilane, le 3-glycidoxypropylalkyldialcoxysilane, le 3-acryloxypropylalkyldialcoxysilane, le 3-aminopropylalkyldialcoxysilane, le vinylalkyldialcoxysilane, le phénylaminopropylalkyldialcoxysilane, l'aminoalkylalkyldialcoxydisilane, le N(2-aminoéthyl)-3-aminopropylalkyldialcoxysilane, l'i-butylméthoxysilane, la bis(triméthoxysilylpropyl)amine, le N-(triméthoxysilylméthyl)-O-méthylcarbamate, le N-diméthoxy(méthyl)silylméthyl-O-méthylcarbamate, le (N-phénylaminométhyl)triméthoxysilane, le (N-cyclohexylaminométhyl)triéthoxysilane, le (N-cyclohexylaminométhyl)méthyldiéthoxysilane, le (N-phénylaminométhyl)méthyldiméthoxysilane, le (N-phénylaminométhyl)triméthoxysilane, les hydrolysats partiels des silanes susmentionnés ou les mélanges des silanes et/ou des hydrolysats partiels susmentionnés.

10. Utilisation selon au moins l'une quelconque des revendications précédentes 2 à 9, **caractérisée en ce que** le composant B contient 1 à 20% en poids, de préférence 3 à 15% en poids, d'eau, à chaque fois par rapport au poids total du composant B.

11. Utilisation selon au moins l'une quelconque des revendications précédentes 2 à 10, **caractérisée en ce que** le rapport pondéral des composants A et B vaut 1:1 à 200:1, de préférence 1:1 à 100:1.
